# EUROPEAN PATENT SPECIFICATION

(11) **EP 3 202 622 B1**
(45) Date of publication and mention of the grant of the patent: **09.01.2019**
(21) Application number: 16154248.5
(22) Date of filing: 04.02.2016
(51) Int. Cl.: B60R 9/058

(54) **A LOAD CARRIER FOOT**
LASTTRÄGERFUSS
PIED DE PORTE-CHARGE

(43) Date of publication of application: 09.08.2017
(73) Proprietor: Mont Blanc Industri AB, 516 90 Dalsjöfors (SE)
(72) Inventor: Westberg, Petrus, 504 57 BORÅS (SE); Hallenbert, Lennart, 447 93 VÅRGÅRDA (SE)
(74) Representative: AWA Sweden AB

(56) References cited:
- EP-A1- 2 746 108
- EP-A1- 2 905 178

## Description

### Technical field of the Invention

The present invention relates to a load carrier foot for a vehicle.

### Background of the Invention

The internal space for luggage in many vehicles are limited, thus a luggage carrier may be mounted to the roof of the vehicle. The luggage carrier for many vehicles comprises load carrier bars which are arranged transversal to the driving direction of the vehicle. At each end of the load carrier bars, a load carrier foot (also referred to as a mounting foot) is arranged. Each load carrier foot is arranged to hold an end portion of the corresponding load carrier bar e.g. by means of a fastening arrangement comprising e.g. a rivet, or a screw and nut arrangement. Furthermore, each load carrier foot typically comprises clamping elements which clamps around mounting rails which are fitted on the vehicle, or clamps to the vehicle itself. For example, such clamping element is shown in EP 2 905 178, which according to its abstract discloses a load carrier foot of clamping type comprising a tensioning arrangement. The tensioning arrangement comprises a cam member and a separate lever. The lever can be operated to pivot the cam member to impart a clamping force to retain the load carrier foot. Optionally, the lever, or a separate release member can be used pivot back the cam member to detach the load carrier foot.

The clamping elements are often adjustable by an adjustable mechanism, for example a screw which is rotated into a receiving element (e.g. a nut) until a suitable clamping force is achieved. This is, for example, shown in EP 1 683 679.

However, the adjustable mechanism is associated with certain problems. For example, the person installing the load carrier foot to the vehicle might find it troublesome to adjust the adjustable mechanism correctly, as he/she might be unsure of how tight the adjustable mechanism should be adjusted. Another problem with the adjustable mechanism is that the screw and receiving element can be locked to each other in an undesirable position, e.g. if water penetrates the adjustable mechanism and subsequently freezes, causing the adjustable mechanism to stuck.

There is thus a need for improving the state of the art to provide a load carrier foot which at least partly solves these problems.

### Summary of the Invention

It is an object of the present invention to improve the current state of the art, to at least partly solve the above problem and to provide an improved load carrier foot.

The invention is based on the insight that by having a positioning arm operatively connected to the bracket, the positioning arm can arrange the bracket in a positioning state (referred to as the second state below) prior to clamping the bracket to the vehicle, simply by moving the positioning arm from its first position to its second position. Furthermore, the positioning arm can easily release the bracket from the positioning state to a release state (referred to as the first state below) where a large distance between the bracket and the vehicle facilitating release of the load carrier foot from the vehicle.

According to a first aspect of the present invention, a load carrier foot is provided. The load carrier foot comprises:
a body having a first portion configured to be connected to a load carrier bar, and having a second portion comprising a vehicle support surface configured to rest against a first surface of a vehicle, and
a positioning and tensioning arrangement comprising
   a bracket configured to clamp a second surface of the vehicle, said bracket being arrangeable:
      in a first state,
      in a second state where the bracket is arranged closer to said second surface as compared to in said first state, and
      in a third state where the bracket is in contact with the second surface of the vehicle in such a way that the bracket clamps the second surface of the vehicle, and
      a pivotable tensioning lever arm operatively connected to said bracket, and being configured to, by a pivoting movement of the pivotable tensioning lever arm, move said bracket from said second state to said third state in order to clamp the bracket to the second surface of the vehicle,
wherein said positioning and tensioning arrangement further comprises
a positioning arrangement comprising a positioning arm operatively connected to said bracket, and being configured to, by a movement of the positioning arm which is at least partly independent of the pivoting movement of said pivotable tensioning lever arm, move said bracket from said first state to said second state in order to position the bracket prior to clamping the bracket to the second surface of the vehicle.

Hereby, the movement of the bracket from its first state (i.e. the above mentioned release state, which for example may be a fully open state) to its third state (i.e. the clamping state) can be carried out by two different, and separated, mechanisms. That is, at least one of the two different arms can move the bracket independently of the other arm. In other words, the movement of the bracket is divided into at least two different movements having separate origins of applied force. For moving the bracket from its first state to its second state, the positioning arm is configured to receive the sufficient force, e.g. directly by the hand of a user, and transferring that force to the bracket for moving the bracket from its first state to its second state independently of any pivoting movement of the pivotable tensioning lever arm, while the pivotable tensioning lever arm on the other hand is configured to receive the sufficient force, e.g. directly by the hand of a user, and transferring that force to the bracket for moving the bracket from its second state to its third state (the pivoting movement of the pivotable tensioning lever arm being preferably independently of any movement of the positioning arm).

By configuring the positioning arm such that its movement is at least partly independent from the pivoting movement of the pivotable tensioning lever arm, the bracket can be moved in a positioning state (i.e. the second state) without activating/pivoting the pivotable tensioning lever arm. This type of configuration has a number of advantages, e.g. that the pivotable tensioning lever arm needs not to be configured to include the whole movement of the bracket from an open state (e.g. the first state, which may or may not be a fully open state) which allows easy application of the load carrier foot to the vehicle, to its clamping state (i.e. the third state). Thus, a larger part of the pivoting movement of the pivotable tensioning lever arm may be used to clamp the bracket to the vehicle, compared to the case where a larger part of the pivoting movement is needed for positioning the bracket before clamping. Instead, the positioning of the bracket is carried out by the positioning arm. Furthermore, the positioning arm provides the possibility for having the first state of the bracket at a larger distance between the vehicle and the bracket and thus facilitating application of the load carrier foot to the vehicle, and release of the load carrier foot from the vehicle, without affecting the clamping function or the pivotable tensioning lever arrangement.

According to at least one example embodiment, the pivotable movement of the pivotable tensioning lever arm is at least partly independent to the movement of said positioning arm. Thus, the two different movements of the pivotable tensioning lever arm and the positioning arm, respectively, are at least partly independent of each other. Hereby, the bracket can be moved from its first state to its second state (mainly or completely) by the positioning arm while the pivotable tensioning lever arm is more or less still (i.e. not activated or pivoting), such as e.g. completely still, and subsequently, the bracket can be moved from its second state to its third state (mainly or completely) by the pivotable tensioning lever arm while the positioning arm is more or less still (i.e. not activated or moved), such as e.g. completely still.

According to at least one example embodiment, said first, second and third states of the bracket are discrete states. In other words, the positioning and tensioning arrangement is configured to move said bracket in a stepwise manner (i.e. not in a continuous manner). That is, the positioning arm is configured to move said bracket from the first (discrete) state to the second (discrete) state, in a stepwise manner (i.e. not in a continuous manner). In other words, there is no state in between the first and the second states in which the bracket can be configured by the positioning arm (and no state in between the second and the third states in which the bracket can be configured by the positioning arm). Correspondingly, the pivotable tensioning lever arm is configured to move said bracket from the second (discrete) state to the third (discrete) state.

According to at least one example embodiment, the positioning arm is, for a majority of its movement when moving the bracket from its first state to its second state, independently movable of the pivoting movement of the pivotable tensioning lever arm.

That is, the pivotable tensioning lever arm is not moving in contributing manner to the positioning arm as the latter moves the bracket from the first state to the second state. For example, the pivotable tensioning lever arm is still as the bracket is moved from the second state to the third state.

According to at least one example embodiment, the pivotable tensioning lever arm is, for a majority of its pivoting movement when moving the bracket from its second state to its third state, independently movable of a movement of the positioning arm.

That is, the positioning arm is not moving in contributing manner to the pivotable tensioning lever arm as the latter moves the bracket from the second state to the third state. For example, the positioning arm is still, at least in relation to the bracket, as the bracket is moved from the second state to the third state.

According to at least one example embodiment, the pivotable tensioning lever arm is operatively disconnected from the positioning arm, to such degree that a movement of one of the pivotable tensioning lever arm and the positioning arm, does not result in a bracket induced movement of the other one of the pivotable tensioning lever arm and the positioning arm.

Furthermore, by having a positioning arm and pivotable tensioning lever arm, the bracket can easily be moved from its first state to its second state (and vice versa), and from its second state to its third state, respectively, simply by moving the positioning arm and pivoting the pivotable tensioning lever arm, respectively. Hence, more complex procedures such as e.g. adjusting a screw by turning the screw, can be dispensed with e.g. for positioning the bracket before clamping and/or positioning the bracket for release of the load carrier foot from the vehicle.

According to at least one example embodiment, said pivotable tensioning lever arm is configured to pivot about a tensioning pivot axis in a direction towards said body when the pivotable tensioning lever arm moves said bracket from its second state to its third state.

Hereby, when the bracket is in its third state, the pivotable tensioning lever arm will be closer to the body compared to when the bracket is in its second (and first) state. Thus, the pivotable tensioning lever arm is less likely to undesirably extend or stick out from the load carrier foot. Thus, the risk of having an accidently release of the pivotable tensioning lever arm (i.e. accidently pivoting of the pivotable tensioning lever arm in a direction away from the body) causing the bracket to move from its third state to its second state is reduced or even prevented.

The pivotable tensioning lever arm may e.g. be pivoted from a first position in where the bracket is in its second state, to a second position in where the bracket is in its third state, by pushing the pivotable tensioning lever arm in a direction towards the body of the load carrier foot. Naturally, the bracket can be moved from its third state to its second state by pulling the pivotable tensioning lever arm in a direction away from the body.

According to at least one alternative example embodiment, said pivotable tensioning lever arm is configured to pivot about a tensioning pivot axis in a direction away from said body when the pivotable tensioning lever arm moves said bracket from its second state to its third state.

According to at least one example embodiment, said positioning arm is a pivotable positioning arm which is configured to pivot about a positioning pivot axis in a direction towards said body when the pivotable positioning arm moves said bracket from its first state to its second state.

Hence, the movement of each one of the arms (i.e. the positioning arm and the pivotable tensioning lever arm) may be a pivoting movement. Thus, the bracket can be moved between its respective states simply by pivoting the positioning arm and/or the pivotable tensioning lever arm. Correspondingly, the pivoting movement of the pivotable positioning arm is at least partly, such as e.g. to a majority of its pivoting movement (when moving the bracket from its first state to its second state), independently movable of the pivoting movement of the pivotable tensioning lever arm. Thus, the pivoting movement of the pivotable tensioning lever arm, as the bracket is moved from its second state to its third state, is at least partly, such as e.g. to a majority of its pivoting movement, independently movable of the pivoting movement of the pivoting positioning arm.

According to at least one example embodiment, the tensioning pivot axis and the positioning pivot axis are physically separated from each other. According to at least one alternative example embodiment, the tensioning pivot axis and the positioning pivot axis make up a common pivoting axis for the pivotable tensioning lever arm and the pivotable positioning arm.

By pivoting the pivotable positioning arm towards the body when the bracket is to be moved to its second state (and also when the bracket is in its third state) the pivotable positioning arm will be closer to the body compared to when the bracket is in its first state. Thus, the pivotable positioning arm is less likely to undesirably extend or stick out from the load carrier foot. Thus, the risk of having an accidently release of the pivotable positioning arm (i.e. accidently pivoting of the pivotable positioning arm in a direction away from the body) causing the bracket to move from its second state to its first state is reduced or even prevented.

The pivotable positioning arm may e.g. be pivoted from a first position in where the bracket is in its first state, to a second position in where the bracket is in its second state, by pushing the pivotable positioning arm in a direction towards the body of the load carrier foot. Naturally, the bracket can be moved from its second state to its first state by pulling the pivotable positioning arm in a direction away from the body.

According to at least one alternative example embodiment, said pivotable positioning arm is configured to pivot about a positioning pivot axis in a direction away from said body when the pivotable positioning arm moves said bracket from its first state to its second state.

According to at least one example embodiment, when the bracket is in its third state, the pivotable tensioning lever arm is configured to lock the positioning arm in position.

Hereby, the risk of having an accidently release of the positioning arm (i.e. accidently moving or pivoting of the positioning arm in a direction away from the body) causing the bracket to move from its second state to its first state is reduced or even prevented.

The pivotable tensioning lever arm may for e.g. in its second position be arranged to at least partly cover the positioning arm (the positioning arm also being in its second position) and thus is holding the latter in its position. According to at least one example embodiment, the pivotable tensioning lever arm is configured to lock the positioning arm in position by means of a locking means, such as e.g. a locking protrusion adapted to lock to a locking indentation of the positioning arm.

According to at least one example embodiment, said bracket is a separate element from said body, and wherein said positioning and tensioning arrangement further comprises a connecting arm operatively connecting said body to said bracket in such a way that said bracket is movably connected to said body.

Thus, the bracket may be a separate element from, but movably connected to (by means of the connecting arm), said body. In other words, the bracket is movably connected to the body by means of the connecting arm.

According to at least one example embodiment, the connecting arm is operatively connected to, e.g. by being directly connected to, at least one of (preferably each one of) the pivotable tensioning lever arm and the positioning arm. Thus, the respective pivotable tensioning lever arm and the positioning arm may move said bracket (by its respective mechanism) relative said body by moving the bracket along the connecting arm.

In other words, the connecting arm operatively connects the movable parts, (such as e.g. the bracket and the tensioning and positioning arrangement) with the stationary parts (such as e.g. the body) of the load carrier foot. Hereby, the bracket can be moved relative the body in order to clamp around the second surface of the vehicle. Thus, the bracket may be moved relative the second surface of the vehicle by use of said connecting arm.

According to at least one example embodiment, the bracket and tensioning and positioning arrangement is relatively movable to the connecting arm. That is, the distance from an end portion of the connecting arm which is connected to the bracket and/or the tensioning and positioning arrangement, to the end portion of the connecting arm which is connected to the body (or another stationary part connected to the body) is fixed. Thus, the bracket and/or parts of the tensioning and positioning arrangement may move closer and further away from the body along the connecting arm.

According to at least one example embodiment, said pivotable tensioning lever arm comprises a first end portion configured as a handle, and a second end portion configured as a cam portion.

The handle may be manually operated by a user, e.g. by the hand of the user, in order to applied the force to the pivotable tensioning lever arm needed to move the bracket from the second state to the third state. The cam portion is configured for transferring the applied force (to the handle of the pivotable tensioning lever arm) into a movement of the bracket from its second state to its third state, e.g. by pushing against the bracket with the connecting arm as a counter holder.

According to at least one example embodiment, said positioning arm comprises a spacer portion configured to, when the bracket is moved from its first state to its second state, press the bracket towards the body.

The spacer portion may e.g. be configured to press against a part or portion which is connected to the connecting arm, such as e.g. a portion of the pivotable tensioning lever arm, or alternatively press against a portion of the connecting arm. That is, a stationary part or portion (i.e. stationary in relation to the body as compared to the bracket which is movable in relation to the bracket) may act as a counter holder for the spacer portion which thereby may push against the bracket and thereby move the bracket relative the body. For example, the spacer portion may, when the bracket is in said second state, be arranged between the bracket and a portion of the pivotable tensioning lever arm (the latter being, when the bracket is its second state, fixed in position by being connected to the connecting arm).

Thus, during movement of the positioning arm into its second position, the positioning arm may e.g. use the second end portion of the pivotable tensioning lever arm as a counter holder when pushing/pressing the bracket towards the body. That is, in the second position of the positioning arm, the positioning arm may press and move the bracket by pressing against the pivotable tensioning lever arm, such as e.g. against the second end portion of the pivotable tensioning lever arm, in order to move the bracket. As stated above, it should be understood that the pivotable tensioning lever arm (in the first and the second state of the bracket) is fixed in position relative the body of the load carrier foot by means of its connection to the connecting arm.

It should be understood that, in the first state, the bracket and the counter holder means (that is, e.g. the second end portion of the pivotable tensioning lever arm), in the gap where the spacer portion is to be inserted, may be separated by a separating distance. The separating distance is then increased as the spacer portion is moved into said gap, when the positioning arm is moved into its second position causing the bracket to be moved into its second state. The difference between the separating distance in the first state and the second state of the bracket can be pre-determined and set when manufacturing the load carrier foot.

According to at least one alternative example embodiment, the positioning arm is configured as a lever arm, e.g. similar to the pivotable tensioning lever arm, and may upon activation move the bracket from the first state to the second state by means of a lever function. For such embodiments, the positioning arm may be referred to as a pivotable positioning lever arm. Such lever arm may e.g. have a handle portion and a cam portion. By separating the origin of the movement of the bracket into at least two different pivoting lever arms (i.e. the pivotable positioning lever arm and the pivotable tensioning lever arm), each of the pivoting movement of the pivoting lever arms can be decreased as compared to having only one pivoting lever arm.

According to at least one example embodiment, said positioning arrangement further comprises a positioning arm holder, and wherein said positioning arm has a first end portion configured as a handle, and a second end portion connected to said positioning arm holder, wherein said positioning arm is configured to be moved from a first position to a second position when moving said bracket from its first state to its second state.

The positioning pivot axis is preferably positioned in the positioning arm holder.

According to at least one example embodiment, said bracket comprises a support structure portion supporting said positioning arm and said pivotable tensioning lever arm, said support structure portion being arranged between said body, and said positioning arm and pivotable tensioning lever arm.

The positioning arm holder may preferably be attached to said support structure portion, and thereby support the positioning arm. According to at least one example embodiment, said positioning arm holder houses a connection between the connecting arm and the pivotable tensioning lever arm.

According to at least one example embodiment, the pivotable tensioning lever arm, in its first position, and the positioning arm, in its first position, are extending away from said support structure portion.

According to at least one example embodiment, the pivotable tensioning lever arm, in its second position, and the positioning arm, in its second position, are extending along said support structure portion (e.g. by being parallel to the support structure portion, e.g. by resting against the support structure portion).

The pivotable tensioning lever arm and the positioning arm may be described as being outwardly arranged to said support structure portion (i.e. in relation to the body or the vehicle which may be described as being inwardly arranged to said support structure portion).

According to at least one example embodiment, when said pivotable tensioning lever arm is moved from its first position to its second position, said cam portion acts on said support structure portion in such a way that the bracket is moved from the second state to the third state. As previously described, the connecting arm (or a part/portion connected to the connecting arm) may act as counter holder to the cam portion.

Thus, according to at least one example embodiment, when the positioning arm moves the bracket from the first state to the second state, the pivotable tensioning lever arm is fixed in position relative the body by means of the connecting arm, and when the pivotable tensioning lever arm moves the bracket from the second state to the third state, the positioning arrangement is moved together with the bracket as the positioning arm holder is attached to the support structure portion of the bracket. However, note that this movement of the positioning arrangement is not in any way contributing to the movement of the bracket from the second state to the third state, and that the positioning arrangement is fixed relative the bracket.

According to at least one example embodiment, said bracket with said support structure portion may be referred to as a clamp or clamping element.

According to at least one example embodiment, said bracket comprises at least two separated, but connected, parts: the support structure portion comprised in a first part, and a clamping portion (configured for clamping the second surface of the vehicle) comprised in a second part. According to at least one example embodiment, the bracket and the support structure portion is the same component, i.e. made in one piece, having a first portion configured as a support structure portion, and a second portion configured as a clamping portion.

The bracket can be manufactured from sheet metal. The clamping portion and the support structure portion may both be made from sheet metal. However, according to at least one example embodiment, the clamping portion (e.g. comprised in the first part) and the support structure portion (e.g. comprised in the second part) are made from different types of material. The material of the clamping portion may e.g. be comprised of a resin or a composite based material.

According to at least one example embodiment, said pivotable tensioning lever arm is configured to pivot between its respective end positions by less than 180 degrees. According to at least one example embodiment, said pivotable tensioning lever arm is configured to pivot between its respective end positions by less than 160, 140, 120 or 100 degrees.

According to at least one example embodiment, said pivotable positioning arm (e.g. being arranged as a lever arm as previously discussed) is configured to pivot between its respective end positions by less than 180 degrees. According to at least one example embodiment, said pivotable positioning arm is configured to pivot between its respective end positions by less than 160, 140, 120 or 100 degrees.

According to at least one alternative example embodiment, said pivotable tensioning lever arm is configured to pivot between its respective end positions by more than 180 degrees. According to at least one alternative example embodiment, said pivotable positioning arm is configured to pivot between its respective end positions by more than 180 degrees.

According to at least one example embodiment, the main extension of said pivotable tensioning lever arm is larger compared to the main extension of said positioning arm.

Thus, the pivotable tensioning lever arm may be longer compared to the positioning arm.

The positioning arm can be made relatively smaller compared to the pivotable tensioning lever arm as less force is needed to move the bracket from its first state to its second state, as compared to moving the bracket from its second state to its third state.

According to at least one example embodiment, wherein in said first state, said bracket is arranged at a first distance from the second surface of the vehicle, and in said second state said bracket is arranged at a second distance from the second surface of the vehicle, wherein said second distance is smaller than said first distance.

Hereby, the bracket may easily be released and removed from the vehicle, as well as being applied to the vehicle, when the bracket is in its first state. Furthermore, the bracket may be positioned in a pre-clamping state or positioning state, where the bracket e.g. is loosely locked to the vehicle (i.e. the bracket can be adjusted in position but hardly be removed from the vehicle) by moving the bracket into its second state.

According to at least one example embodiment, the load carrier foot further comprises a guiding pin connected to said bracket, said guiding pin being configured to be guided into a indentation in the second surface of the vehicle.

This facilitates correct positioning and clamping of the bracket to the vehicle. For example, the length of the guiding pin is configured such that the guiding pin is distant from said indentation when the bracket is in its first state (and possibly also when the bracket is in its second state), but is inserted into the indentation when the bracket is in its second state and/or third state.

Generally, all terms used in the claims are to be interpreted according to their ordinary meaning in the technical field, unless explicitly defined otherwise herein. All references to "a/an/the [element, device, component, means, step, etc.]" are to be interpreted openly as referring to at least one instance of said element, device, component, means, step, etc., unless explicitly stated otherwise.

### Brief description of the drawings

The above, as well as additional objects, features and advantages of the present invention, will be better understood through the following illustrative and non-limiting detailed description of exemplary embodiments of the present invention, with reference to the appended drawings, where the same reference numerals will be used for similar elements, wherein:
Fig. 1 shows a load carrier foot in accordance with at least one example embodiments of the invention;
Fig. 2 - Fig. 4 shows the lead carrier foot in Fig. 1, in various positions relative the vehicle to where the load carrier foot is attached, in accordance with at least one example embodiments of the invention;
Fig. 5 shows an exploded view of a load carrier foot in accordance with at least one example embodiment of the invention;
Fig. 6 shows the load carrier foot in Fig. 5 in cross sectional side view.

### Detailed description of the drawings

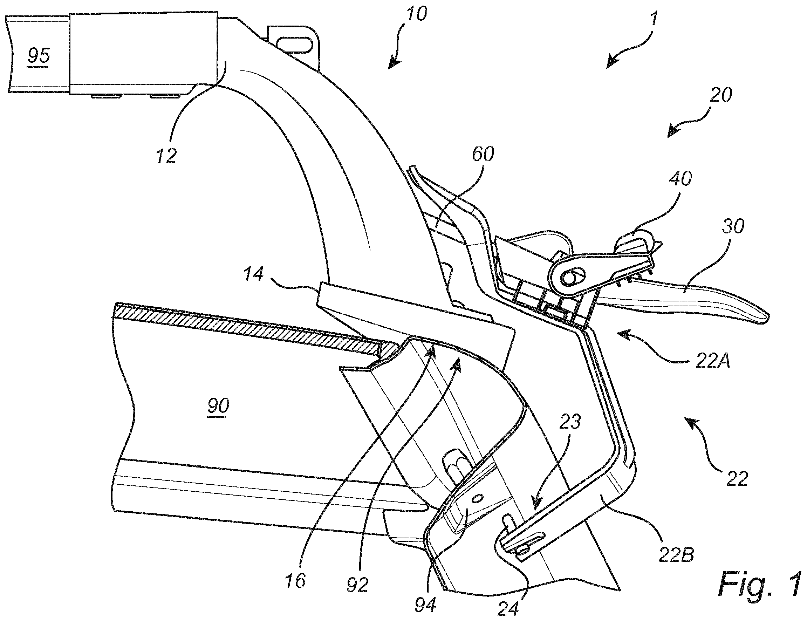

Fig. 1, Fig. 2, Fig. 3 and Fig. 4 all illustrate the same load carrier foot 1, in accordance with one example embodiment of the invention. First, the structure of the load carrier foot 1 will be explained with reference to Fig. 1, and second, the procedure of attaching the load carrier foot 1 to a vehicle 90 (only a part of the vehicle is shown in Fig. 1 - Fig. 4) will be described with reference to Fig. 1 - Fig. 4.

The load carrier foot 1 comprises a body 10 having a first portion 12 configured to be connected to a load carrier bar 95, and a second portion 14 comprising a vehicle support surface 16 configured to rest against a first surface 92 of a vehicle 90 (of which only a portion is shown). As seen in Fig. 1, the first portion 12 of the body 10 of the load carrier foot 1 is in fact connected to the load carrier bar 95, and the vehicle support surface 16 of the second potion 14 of the body 10 of the load carrier foot 1 is in fact resting against the first surface 92 of the vehicle 90.

In order to be able to attach, and fasten the load carrier foot 1 to the vehicle 90, a positioning and tensioning arrangement 20 is used. The positioning and tensioning arrangement 20 comprises a bracket 22 configured to clamp a second surface 94 of the vehicle 90, a pivotable tensioning lever arm 30 operatively connected to the bracket 22, and a positioning arrangement 40 operatively connected to the bracket 22. Furthermore, a support structure portion 22A supports the pivotable tensioning lever arm 30 and the positioning arrangement 40. In Fig. 1, the bracket 22 comprises the support structure portion 22A. Furthermore, the bracket 22 comprises a clamping portion 22B which is configured to clamp the second surface 94 of the vehicle 90. Stated differently, the support structure portion 22A and the clamping portion 22B are comprised in the bracket 22. According to at least one example embodiment, the support structure portion 22A and the clamping portion 22B may be separate parts of the bracket 22.

The positioning and tensioning arrangement 20 in Fig. 1 further comprises a connecting arm 60 attached to the body 10 of the load carrier foot 1, and operatively connected to each one of the pivotable tensioning lever arm 30 and the positioning arrangement 40. Hereby, the bracket 22 may be moved relative the body 10 of the load carrier foot 1. As illustrated in Fig. 1, the bracket 22 is a separate element from the body 10, but is connected to the body 10 via the connecting arm 60. Hence, the bracket 22 may be moved away from, and closer to, the body 10 of the load carrier foot 1, and hence the vehicle 90, by means of the pivotable tensioning lever arm 30 and the positioning arrangement 40 operating on the bracket 22, the bracket 22 being movable along the connecting arm 60 (this is further explained below).

The procedure of attaching and fastening the load carrier foot 1 to the vehicle 90 will now be described with reference to Fig. 1 - Fig. 4.

In Fig. 1, the load carrier foot 1 has been arranged on top of the vehicle 90 in a position where the vehicle support surface 16 of the second potion 14 of the body 10 of the load carrier foot 1 is resting against the first surface 92 of the vehicle 90. As stated above, the first portion 12 of the body 10 of the load carrier foot 1 is preferably already connected to a load carrier bar 95. However, the bracket 22, and its clamping portion 22B, in Fig. 1 is not arranged in position to clamp around a portion of the vehicle 90, such as e.g. by clamping the second surface 94 of the vehicle 90.

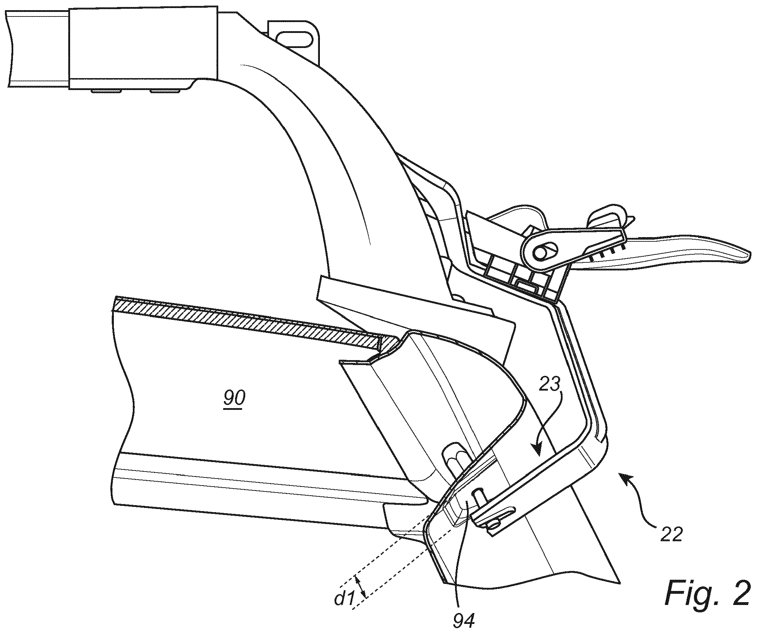

In Fig. 2, the bracket 22 has been moved (preferably by being moved manually) in position to be able to clamp the second surface 94 of the vehicle 90. This may be referred to as the bracket 22 being in a first state. The first state may also be referred to as a release state or prepared state (i.e. the bracket 22 being able to be release from the vehicle, respective the bracket 22 being prepared to be positioned for clamping, depending on if the load carrier foot 1 is to be released from or applied to the vehicle 90). According to at least one example embodiment, the first state is defined by the shortest distance, indicated by the distance d1 in Fig. 2, from a clamping surface 23 of the bracket 22, and the second surface 94 of the vehicle 90.

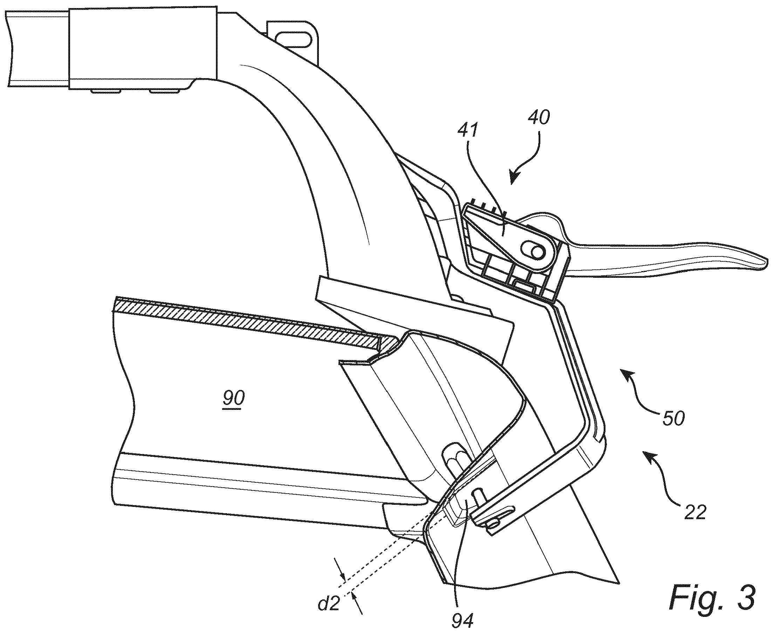

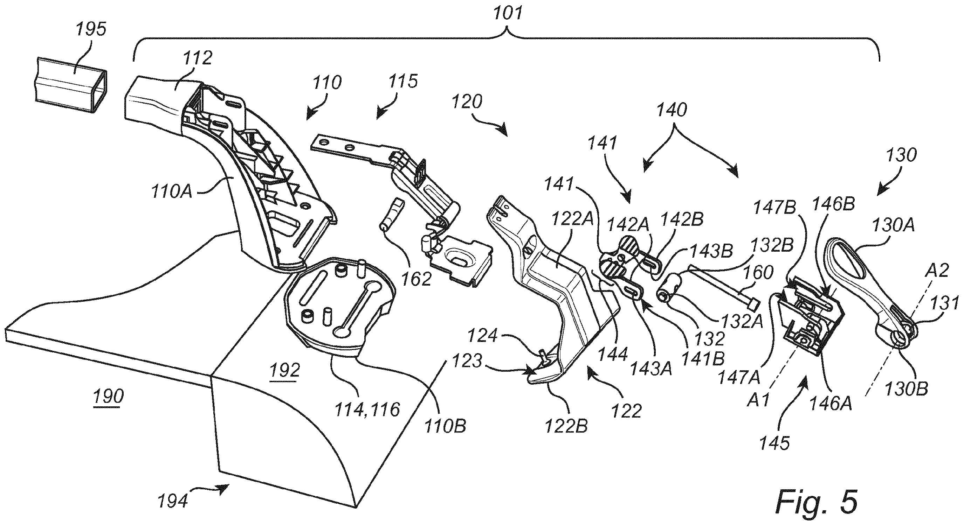

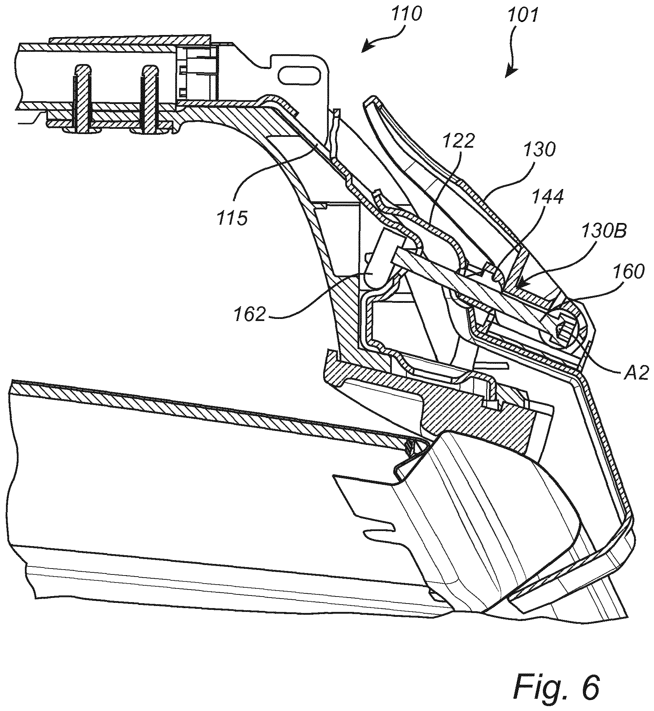

In Fig. 3, the bracket 22 has been moved further into a second state by the positioning arrangement 40. In more detail, a positioning arm 41 of the positioning arrangement 40 has been moved from a first position to a second position, thereby moving the bracket 22 from its first state to its second state. That is, the positing arrangement 40 has moved the bracket 22 from the first state (as in Fig. 2) to the second state (as in Fig. 3), in order to position the bracket 22 prior to clamping the bracket 22 to the second surface 94 of the vehicle 90. Thus, the second state may be referred to as a positioning state. Typically in the second state, the bracket 22 can not easily be moved out of its state without releasing the bracket 22 from the second state by the positioning arrangement 40 (typically this is achieved by carrying out a reversed movement of the positioning arrangement 40, which is further explained with reference to Fig. 5 and Fig. 6), as the bracket 22, and the whole support structure portion 22A are positioned in a more or less locked state (that is loosely locked state) in relation to the body 10 of the load carrier foot 1 and the vehicle 90. Thus, the second state may be referred to as a locked positioning state. In other words, in the second state, the bracket 22 may be slightly moved, such as e.g. by being tilted or slightly adapted in position, without being released from its second state.

According to at least one example embodiment, in the first state, the bracket 22, such as the clamping surface 23 of the bracket 22, is arranged at a first distance d1 from the second surface 94 of the vehicle 90. In the second state the bracket 22, such as the clamping surface 23 of the bracket 22, is arranged at a second distance d2 from the second surface 94 of the vehicle 90. The second distance d2 is typically smaller than the first distance d1. However, it should be mentioned that, in the first state, a portion of the bracket 22, such as e.g. another surface of the bracket 22 compared to the clamping surface 23, may be in contact with another portion of the vehicle 90, such as e.g. another surface compared to the second surface 94. This type of contact between the bracket 22 and the vehicle 90 may remain unchanged as the bracket 22 moves from the first state to the second state.

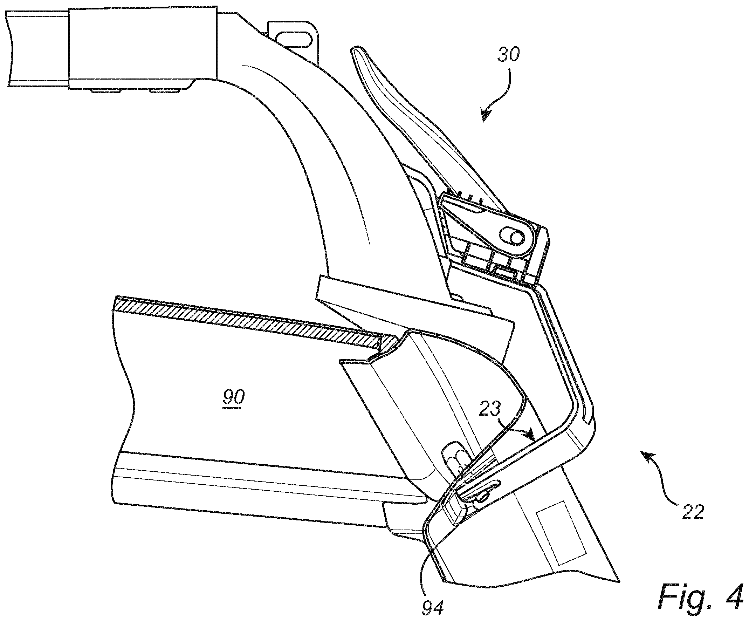

In Fig. 4, the bracket 22 has been moved into a third state by the pivotable tensioning lever arm 30, where the bracket 22 is in a clamping relation with the vehicle 90, such that the clamping surface 23 of the bracket is clamped against the second surface 94 of the vehicle 90. In other words, the pivotable tensioning lever arm has moved the bracket 22 from the second state (as in Fig. 3) to the third state (as in Fig. 4) in order to clamp the bracket 22 to the second surface 94 of the vehicle 90. The third state may thus be referred to as a clamping state. Typically in the third state, the bracket 22 can not be moved out of position without releasing the bracket 22 from the third state by the pivotable tensioning lever arm 30 (typically this is achieved by carrying out a reversed movement of the pivotable tensioning lever arm 30, which is further explained with reference to Fig. 5 and Fig. 6), as the bracket 22, and the support structure portion 22A, are positioned in a locked state in relation to the body 10 of the load carrier foot 1, and the vehicle 90.

As illustrated in Fig. 1 - Fig. 4, the movement of the positioning arm 41, i.e. the positioning movement, is (at least partly) independent compared to the pivotable movement of the pivotable tensioning lever arm 30. Correspondingly, the pivotable movement of the pivotable tensioning lever arm 30 is (at least partly) independent compared to the (positioning) movement of the positioning arm 41. That is, when moving the positioning arm 41 from its first position (i.e. its position when the bracket 22 is in the first state) to its second position (i.e. its position when the bracket 22 is in the second state), the pivotable tensioning lever arm 30 remains still (not activated), while when moving the pivotable tensioning lever arm 30 from its first position (i.e. its position when the bracket 22 is in the first state and second state) to its second position (i.e. its position when the bracket 22 is in the third state), the positioning arm 41 remains still, at least relative the bracket 22 (the positioning arm 41 may however move together with the bracket 22). As also seen in Fig. 4 when the bracket 22 is in its third state, the pivotable tensioning lever arm 30 is locks the positioning arm 41 in its position by being arranged at least partly on top of the positioning arm 41.

As illustrated in Fig. 1 - Fig. 4, the load carrier foot 1 comprises a guiding pin 24 connected to the bracket 22. The guiding pin 24 is configured to facilitate guiding of the bracket 22 as the bracket 22 is moved from its first state to its second state, and from its second state to its third state. The guiding pin 24 is preferably configured to be guided into an indentation, or a through hole, in the second surface 94 of the vehicle 90. The guiding pin 24 may, or may not, be in contact with the vehicle 90 when the bracket 22 is in its first state (it may e.g. be in contact by being in contact with an inner surface of the indentation, or through hole, of the second surface 94 of the vehicle), and may thus be (further) inserted into the indentation, or through hole, when the bracket 22 is moved to its second state and third state.

According to at least one alternative example embodiment, the bracket 22 comprises, or is connected to, another connecting part, which may be in contact with the vehicle 90 in the first state and/or the second state and/or the third state of the bracket 22.

To summarize, the bracket 22 is arrangeable in the first state, in the second state where the bracket 22 is arranged closer to the second surface 94 of the vehicle 90 as compared to in the first state, and the bracket 22 is arrangeable in the third state where the bracket 22 is in contact with the second surface 94 of the vehicle 90 in such a way that the bracket 22 clamps the second surface 94 of the vehicle 90. Thus, in the third state, the clamping surface 23 is in forced or clamping contact with the second surface 94 of the vehicle 90.

It should be noted that the first surface 92 and/or the second surface 94 of the vehicle may be comprised in a rail of the car, and the bracket 22 may thus be arranged to clamp around the rail.

Details of the how the positing and tensioning arrangement 20 functions when the bracket 22 is moved from its first state to its second state (and vice versa), and from its second state to its third state (and vice versa) will now be described with reference to Fig. 5 and Fig. 6, together with reference to the first, second and third states described in Fig. 2 - Fig .4.

Fig. 5 shows an exploded view of a load carrier foot 101 in accordance with at least one example embodiment of the invention. The structure and the function of the load carrier foot 101 of Fig. 5 is in principle the same as the structure and the function of the load carrier foot 1 of Fig. 1 - Fig. 4 (with some exceptions which is discussed below). Thus, the reference numerals used for indicating features in Fig. 1 - Fig. 4 corresponds to the reference numerals used for indicating the corresponding features in Fig. 5 but with the additional value of 100 added to each reference numeral. For example, the positing and tensioning arrangement 20 in Fig. 1 - Fig. 4 is referred to as the positing and tensioning arrangement 120 in Fig. 5.

The load carrier foot 101 comprises a pivotable tensioning lever arm 130, a connecting arm 160, a positioning arrangement 140, a bracket 122 having a support structure portion 122A and a clamping portion 122B, an attachment arrangement 115, a body 110 comprising a first body part 110A and a second body part 110B. The load carrier foot 101 further comprises an insert 132 which may be considered as a separate part, or alternatively as a part or portion of the pivotable tensioning lever arm 130, a securing means 162 for securing the connecting arm 160 to the body 110 via the attachment arrangement 115, and a guiding pin 124 configured to be guided into an indentation, or a through hole, in a vehicle 190 to which the load carrier foot 101 is to be attached.

It should be understood that the body 110 in Fig. 5 comprises two body parts 110A, 110B. Thus, the first body part 110A comprises a first portion 112 configured to be connected to a load carrier bar 195, and the second body part 110B comprises a second portion 114 having a vehicle support surface 116 configured to rest against a first surface 192 of the vehicle 190. The second body part 110B may also be referred to as a vehicle resting element 110B. However, the body 110 may be made in one piece as in Fig. 1 - Fig. 4, or alternatively may comprise more than two body parts.

As for the load carrier foot 1 in Fig. 1 - Fig. 4, the load carrier foot 101 of Fig. 5, the bracket 122 is arrangeable in a first state, in a second state where the bracket 122 is arranged closer to a second surface 194 of the vehicle 190 as compared to in the first state, and the bracket 122 is arrangeable in a third state where the bracket 122 is in contact with the second surface 194 of the vehicle 190 in such a way that the bracket 122 clamps the second surface 194 of the vehicle 190. Thus, in the third state, a clamping surface 123 of the bracket 122 is in forced or clamping contact with the second surface 194 of the vehicle 190. Moreover, as for the load carrier foot 1 in Fig. 1 - Fig. 4, the positioning arrangement 140 is configured to move the bracket 122 from the first state to the second state (and vice versa), and the pivotable tensioning lever arm 130 is configured to move the bracket 122 from the second state to the third state (and vice versa), of the load carrier foot 101 of Fig. 5.

As illustrated in Fig 5, the pivotable tensioning lever arm 130 comprises a first end portion 130A configured as a handle 130A, and a second end portion 130B configured as a cam portion 130B. Moreover, as illustrated in Fig 5, the positioning arrangement 140 comprises a positioning arm 141, and a positioning arm holder 145 configured to hold and guide the positioning arm 141. The positioning arm 141 comprises a first end portion 141A configured as a handle, and a second end portion 141B connected to the positioning arm holder 145. The positioning arm 141 is configured to be moved from a first position to a second position by pivoting about a first axis A1 (also referred to as a positioning pivot axis A1) in a direction towards the body 110, in order to move the bracket 122 from the first state to the second state. The second end portion 141B comprises two parallel elongated positioning legs 142A, 142B, each one of the elongated positioning legs 142A, 142B comprising a respective elongated aperture, or through hole 143A, 143B. The elongated apertures 143A, 143B are configured to mate with corresponding holding pins 146A, 146B of the positioning arm holder 145. Furthermore, the positioning arm holder is configured to house a connection between the connecting arm 160 and the pivotable tensioning lever arm 130. In Fig. 5, this connection is embodied by the insert 132 comprising two insert pins 132A, 132B arranged on opposite sides of the insert 132, each insert pin 132A, 132B being configured to mate with a respective guiding aperture 147A, 147B (here exemplified by elongated apertures in the form of guiding tracks 147A, 147B) comprised in the positioning arm holder 145. Furthermore, the pivotable tensioning lever arm 130 comprises a through hole 131 arranged in the cam portion 130B, and being configured to receive, or hold, the insert 132. Thus, the positioning arm holder 145 may move together with the bracket 122 as the bracket moves from the first state to the second state, while insert 132 and the pivotable tensioning lever arm 130 are fixed in position relative the body 110, by means of the insert 132 as the insert pins 132A, 132B are guided in the respective guiding apertures 147A, 147B.

As illustrated in Fig. 5, the pivotable tensioning lever arm 130 is larger than the positioning arm 141. That is, the main extension of the pivotable tensioning lever arm 130 is larger than the main extension of the positioning arm 141. That is, the pivotable tensioning lever arm 130 is longer than the positioning arm 141. The size between the pivotable tensioning lever arm 130 and the positioning arm 141 may differ by a factor of one or more, e.g. between a factor of one to five.

Moreover, the positing arm holder 145 is attached to (e.g. by being firmly attached to) the support structure portion 122A and is thus movable together with the support structure portion 122A (and thus, movable together with the bracket 122). Hence, as the positioning arm 141 is moved from its first position to its second position, the positioning arrangement 140 and the support structure portion 122A moves further towards the body 110 of the load carrier foot 101, and the bracket 122 moves closer to the second surface 194 of the vehicle 190.

It should be noted that the bracket 122 is a separate element from, and movably connected to the body 110, by means of the connecting arm 160. However, in Fig. 5, the attachment arrangement 115 is arranged between the support structure portion 122A of the bracket 122 and the body 110. Thus, in Fig. 5, the bracket 122 is connected to, or is movably connected to, the body 110 via the attachment arrangement 115. According to at least one example embodiment, more parts or portions may be arranged between the support structure portion 122A of the bracket 122 and the body 110. Correspondingly, the connecting arm 160 is operatively connected to the body 110. However, in Fig. 5, the attachment arrangement 115 is arranged between the connecting arm 160 and the body 110. Thus, in Fig. 5, the connecting arm 160 is operatively connected to, such as e.g. being fixed in position to, the body 110 via the attachment arrangement 115, by means of the securing means 162, here embodied as a nut 162. According to at least one example embodiment, more parts or portions may be arranged between the connecting arm 160 and the body 110.

According to at least one example embodiment, the attachment arrangement 115 is comprised in the body 110.

The movement of the bracket 122 from its first state to its second state, and from its second state to its third state will now be further described with reference to Fig. 5 and Fig. 6. Fig. 6 illustrates in cross section the load carrier foot 101 of Fig. 5 in the third state. That is the bracket 122 is clamping the second surface 194 of the vehicle 190, and the pivotable tensioning lever arm 130 is in its second position and the positioning arm 141 is in its second position.

As illustrated in both Fig. 5 and Fig. 6, the positioning arm 141 comprises a spacer portion 144 configured to, when the bracket 122 is moved from its first state to its second state, press the bracket 122 towards the body 110. In Fig. 6 it is shown that the spacer portion 144 presses against a part or portion which is connected to the connecting arm 160, here the second end portion 130B of the pivotable tensioning lever arm 130. That is, the second end portion130B of the pivotable tensioning lever arm 130 acts as a counter holder for the spacer portion 144, which thereby pushes against the bracket 122 (such as against the support structure portion 122A) and thereby move the bracket 122 relative the body. Hence, the spacer portion 144 is, when the bracket 122 is in said second state, arranged between the bracket 122 (such as the support structure portion 122A) and the second end portion 130B of the pivotable tensioning lever arm 130.

It should be understood that the pivotable tensioning lever arm 130 (at least in the first and the second state) is fixed in position relative the body 110 of the load carrier foot 101 by being connected to the connecting arm 160 via the insert 132. Thus, the positing arrangement 140, and the spacer portion 144, may use the second end portion 130B of the pivotable tensioning lever arm 130 as a counter holder when moving into the second state. That is, in the second position of the positioning arm 141, the spacer portion 144 of the positioning arm 141 may press against the pivotable tensioning lever arm 130 in order to move the bracket 122 closer to the second surface 194 of the vehicle 190 (and thus the support structure portion 122A, and the positioning arrangement 140, closer towards the body 110).

When the bracket 122 is moved from its second state to its third state, the pivotable tensioning lever arm 130 is moved from a first position to a second position by pivoting about a second axis A2 (also referred to as a tensioning pivot axis A2) in a direction towards the body 110. When the pivotable tensioning lever arm 130 is moved from its first position to its second position, the cam portion 130B acts on said support structure portion 122A (possibly via a portion of the positioning arm 141) in such a way that the bracket 122 moves closer to, and in clamping contact with, the second surface 194 of the vehicle 190. The second axis A2 is preferably extending through the through hole 131, and the insert 132. Furthermore, in the third state, the cam portion 130B of the pivotable tensioning lever arm 130 may press against the positioning arm 141.

As illustrated in Fig. 6, the connecting arm 160 is fixed in position relative the body 110 and the attachment arrangement 115, by means of the securing means 162, here illustrated as nut 162. The second axis A2, about which the pivotable tensioning lever arm 130 pivots, is thus also fixed in position relative the body 110 and the attachment arrangement 115.

According to at least one example embodiment, the connecting arm 160 may be configured to adjust the distance between the second axis A2 and the body 110 (also referred to as the active length of the connecting arm160), e.g. by providing a connecting arm 160 comprising threads, and a securing element 162 comprising matching threads, whereby the connecting arm 160 may be screwed into the securing element 162 and thereby be moved closer to the body 110. This procedure may e.g. be carried out as a first time adjustment of the active length of the connecting arm 160.

The skilled person realizes that a number of modifications of the embodiments described herein are possible without departing from the scope of the invention, which is defined in the appended claims.

## Claims

1. A load carrier foot (1, 101) comprising:
a body (10, 110) having a first portion (12, 112) configured to be connected to a load carrier bar (95, 195), and having a second portion (14, 114) comprising a vehicle support surface (16, 116) configured to rest against a first surface (92, 192) of a vehicle (90, 190), and
a positioning and tensioning arrangement (20, 120) comprising
a bracket (22, 122) configured to clamp a second surface (94, 194) of the vehicle, said bracket being arrangeable:
in a first state,
in a second state where the bracket is arranged closer to said second surface as compared to in said first state, and
in a third state where the bracket is in contact with the second surface of the vehicle in such a way that the bracket clamps the second surface of the vehicle, and
a pivotable tensioning lever arm (30, 130) operatively connected to said bracket, and being configured to, by a pivoting movement of the pivotable tensioning lever arm, move said bracket from said second state to said third state in order to clamp the bracket to the second surface of the vehicle,
**characterized in that** said positioning and tensioning arrangement further comprises
a positioning arrangement (40, 140) comprising a positioning arm (41, 141) operatively connected to said bracket, and being configured to, by a movement of the positioning arm which is at least partly independent of the pivoting movement of said pivotable tensioning lever arm, move said bracket from said first state to said second state in order to position the bracket prior to clamping the bracket to the second surface of the vehicle.

2. A load carrier foot according to claim 1, wherein the positioning arm is, for a majority of its movement, when moving the bracket from its first state to its second state, independently movable of the pivoting movement of the pivotable tensioning lever arm.

3. A load carrier foot according to any one of the preceding claims, wherein the pivotable tensioning lever arm is, for a majority of its pivoting movement when moving the bracket from its second state to its third state, independently movable of a movement of the positioning arm.

4. A load carrier foot according to any one of the preceding claims, wherein said pivotable tensioning lever arm is configured to pivot about a tensioning pivot axis (A2) in a direction towards said body when the pivotable tensioning lever arm moves said bracket from its second state to its third state.

5. A load carrier foot according to any one of the preceding claims, wherein said positioning arm is a pivotable positioning arm which is configured to pivot about a positioning pivot axis (A1) in a direction towards said body when the pivotable positioning arm moves said bracket from its first state to its second state.

6. A load carrier foot according to any one of the preceding claims, wherein, when the bracket is in its third state, the pivotable tensioning lever arm is configured to lock the positioning arm in position.

7. A load carrier foot according to any one of the preceding claims, wherein said bracket is a separate element from said body, and wherein said positioning and tensioning arrangement further comprises a connecting arm (60, 160) operatively connecting said body to said bracket in such a way that said bracket is movably connected to said body.

8. A load carrier foot according to any one of the preceding claims, wherein said pivotable tensioning lever arm comprises a first end portion (130A) configured as a handle, and a second end portion (130B) configured as a cam portion.

9. A load carrier foot according to any one of the preceding claims, wherein said positioning arrangement further comprises a positioning arm holder (145), and wherein said positioning arm has a first end portion (141A) configured as a handle, and a second end portion (141B) connected to said positioning arm holder, wherein said positioning arm is configured to be moved from a first position to a second position when moving said bracket from its first state to its second state.

10. A load carrier foot according to any one of the preceding claims, wherein said bracket comprises a support structure portion (22A, 122A) supporting said positioning arm and said pivotable tensioning lever arm, said support structure portion being arranged between said body, and said positioning arm and pivotable tensioning lever arm.

11. A load carrier foot according to claim 4, wherein said pivotable tensioning lever arm is configured to pivot between its respective end positions by less than 180 degrees.

12. A load carrier foot according to claim 5, wherein said pivotable positioning arm is configured to pivot between its respective end positions by less than 180 degrees.

13. A load carrier foot according to any one of the preceding claims, wherein in said first state, said bracket is arranged at a first distance (d1) from the second surface of the vehicle, and in said second state said bracket is arranged at a second distance (d2) from the second surface of the vehicle, wherein said second distance is smaller than said first distance.

14. A load carrier foot according to any one of the preceding claims, wherein said positioning arm comprises a spacer portion (144) configured to, when the bracket is moved from its first state to its second state, press the bracket towards the body.

15. A load carrier foot according to any one of the preceding claims, further comprising a guiding pin (24, 124) connected to said bracket, said guiding pin being configured to be guided into a indentation in the second surface of the vehicle.

## Patentansprüche

1. Lastträgerfuß (1, 101), umfassend:
einen Körper (10, 110) mit einem ersten Abschnitt (12, 112), der konfiguriert ist, um mit einer Lastträgerstange (95, 195) verbunden zu sein, und mit einem zweiten Abschnitt (14, 114), der eine Fahrzeugtragfläche (16, 116) umfasst, die konfiguriert ist, um an eine erste Fläche (92, 192) eines Fahrzeugs (90, 190) anzuliegen, und
eine Positionier- und Spannanordnung (20, 120), umfassend
eine Halterung (22, 122), die konfiguriert ist, um eine zweite Fläche (94, 194) des Fahrzeugs zu klemmen, wobei die Halterung anordbar ist:
in einen ersten Zustand,
in einen zweiten Zustand, in dem die Halterung näher zu der zweiten Fläche im Vergleich zu dem ersten Zustand angeordnet ist, und
in einen dritten Zustand, in dem die Halterung mit der zweiten Fläche des Fahrzeugs in einer derartigen Weise in Kontakt ist, dass die Halterung die zweite Fläche des Fahrzeugs klemmt, und
einen schwenkbaren Spannhebelarm (30, 130), der mit der Halterung wirkverbunden ist und konfiguriert ist, um durch eine Schwenkbewegung des schwenkbaren Spannhebelarms die Halterung von dem zweiten Zustand zu dem dritten Zustand zu bewegen, um die Halterung an die zweite Fläche des Fahrzeugs zu klemmen,
**dadurch gekennzeichnet, dass** die Positionier- und Spannanordnung ferner eine Positionieranordnung (40, 140) umfasst, die einen Positionierarm (41, 141) umfasst, der mit der Halterung wirkverbunden ist und konfiguriert ist, um durch eine Bewegung des Positionierarms, der zumindest teilweise unabhängig von der Schwenkbewegung des schwenkbaren Spannhebelarms ist, die Halterung von dem ersten Zustand zu dem zweiten Zustand zu bewegen, um die Halterung zu positionieren, bevor die Halterung an die zweite Fläche des Fahrzeugs geklemmt wird.

2. Lastträgerfuß nach Anspruch 1, wobei der Positionierarm für einen Großteil seiner Bewegung, wenn er die Halterung von ihrem ersten Zustand zu ihrem zweiten Zustand bewegt, von der Schwenkbewegung des schwenkbaren Spannhebelarms unabhängig bewegbar ist.

3. Lastträgerfuß nach einem der vorhergehenden Ansprüche, wobei der schwenkbare Spannhebelarm für einen Großteil seiner Schwenkbewegung, wenn er die Halterung von ihrem zweiten Zustand zu ihrem dritten Zustand bewegt, von einer Bewegung des Positionierarms unabhängig bewegbar ist.

4. Lastträgerfuß nach einem der vorhergehenden Ansprüche, wobei der schwenkbare Spannhebelarm konfiguriert ist, um um eine Spannschwenkachse (A2) in eine Richtung hin zu dem Körper zu schwenken, wenn der schwenkbare Spannhebelarm die Halterung von ihrem zweiten Zustand zu ihrem dritten Zustand bewegt.

5. Lastträgerfuß nach einem der vorhergehenden Ansprüche, wobei der Positionierarm ein schwenkbarer Positionierarm ist, der konfiguriert ist, um um eine Positionierschwenkachse (A1) in eine Richtung hin zu dem Körper zu schwenken, wenn der schwenkbare Positionierarm die Halterung von ihrem ersten Zustand zu ihren zweiten Zustand bewegt.

6. Lastträgerfuß nach einem der vorhergehenden Ansprüche, wobei, wenn die Halterung in ihrem dritten Zustand ist, der schwenkbare Spannhebelarm konfiguriert ist, um den Positionierarm in seiner Position zu verriegeln.

7. Lastträgerfuß nach einem der vorhergehenden Ansprüche, wobei die Halterung ein separates Element von dem Körper ist und wobei die Positionier- und Spannanordnung ferner einen Verbindungsarm (60, 160) umfasst, der den Körper mit der Halterung in einer derartigen Weise wirkverbindet, dass die Halterung mit dem Körper bewegbar verbunden ist.

8. Lastträgerfuß nach einem der vorhergehenden Ansprüche, wobei der schwenkbare Spannhebelarm einen ersten Endabschnitt (130A), der als Griff konfiguriert ist, und einen zweiten Endabschnitt (130B), der als Nockenabschnitt konfiguriert ist, umfasst.

9. Lastträgerfuß nach einem der vorhergehenden Ansprüche, wobei die Positionieranordnung ferner einen Positionierarmhalter (145) umfasst und wobei der Positionierarm einen ersten Endabschnitt (141A), der als Griff konfiguriert ist, und einen zweiten Endabschnitt (141B), der mit dem Positionierarmhalter verbunden ist, hat, wobei der Positionierarm konfiguriert ist, um von einer ersten Position zu einer zweiten Position bewegt zu werden, wenn er die Halterung von ihrem ersten Zustand zu ihrem zweiten Zustand bewegt.

10. Lastträgerfuß nach einem der vorhergehenden Ansprüche, wobei die Halterung einen Tragstrukturabschnitt (22A, 122A) umfasst, der den Positionierarm und den schwenkbaren Spannhebelarm trägt, wobei der Tragstrukturabschnitt zwischen dem Körper und dem Positionierarm und dem schwenkbaren Spannhebelarm angeordnet ist.

11. Lastträgerfuß nach Anspruch 4, wobei der schwenkbare Spannhebelarm konfiguriert ist, um zwischen seinen jeweiligen Endpositionen um weniger als 180 Grad zu schwenken.

12. Lastträgerfuß nach Anspruch 5, wobei der schwenkbare Positionierarm konfiguriert ist, um zwischen seinen jeweiligen Endpositionen um weniger als 180 Grad zu schwenken.

13. Lastträgerfuß nach einem der vorhergehenden Ansprüche, wobei die Halterung in dem ersten Zustand in einem ersten Abstand (d1) von der zweiten Fläche des Fahrzeugs angeordnet ist und die Halterung in dem zweiten Zustand in einem zweiten Abstand (d2) von der zweiten Fläche des Fahrzeugs angeordnet ist, wobei der zweite Abstand kleiner ist als der erste Abstand.

14. Lastträgerfuß nach einem der vorhergehenden Ansprüche, wobei der Positionierarm einen Abstandshalterabschnitt (144) umfasst, der konfiguriert ist, um, wenn die Halterung von ihrem ersten Zustand zu ihrem zweiten Zustand bewegt wird, die Halterung hin zu dem Körper zu drücken.

15. Lastträgerfuß nach einem der vorhergehenden Ansprüche, ferner umfassend einen Führungsstift (24, 124), der mit der Halterung verbunden ist, wobei der Führungsstift konfiguriert ist, um in eine Verzahnung in der zweiten Fläche des Fahrzeugs geführt zu werden.

## Revendications

1. Pied de porte-charge (1,101) comprenant :
un corps (10, 110) ayant une première partie (12, 112) configurée pour être raccordée à une barre de support de charge (95, 195) et ayant une deuxième partie (14, 114) comprenant une surface de support de véhicule (16, 116) configurée pour reposer contre une première surface (92, 192) d'un véhicule (90, 190), et
un agencement de positionnement et de tension (20, 120) comprenant un support (22, 122) configuré pour serrer une deuxième surface (94, 194) du véhicule, ledit support pouvant être disposé :
dans un premier état,
dans un deuxième état où le support est disposé plus près de ladite deuxième surface en comparaison d'un dit premier état, et
dans un troisième état où le support est en contact avec la deuxième surface du véhicule de telle manière que le support serre la deuxième surface du véhicule, et
un bras de levier de tension pivotable (30, 130) raccordé en fonctionnement audit support et étant configuré pour déplacer , lors d'un mouvement de pivotement du bras de levier de tension pivotable, ledit support dudit deuxième état dans ledit troisième état afin de serrer le support à la deuxième surface du véhicule,
**caractérisé en ce que** ledit agencement de positionnement et de tension comprend en plus
un agencement de positionnement (40, 140) comprenant un bras de positionnement (41, 141) raccordé en fonctionnement audit support et étant configuré pour déplacer, lors d'un mouvement du bras de positionnement qui est au moins en partie indépendant du mouvement de pivotement dudit bras de levier de tension pivotable, ledit support dudit premier état audit deuxième état afin de positionner le support avant de serrer le support à la deuxième surface du véhicule.

2. Pied de porte-charge selon la revendication 1, le bras de positionnement étant pour une majorité de son mouvement, en déplaçant le support de son premier état à son deuxième état, indépendamment mobile du mouvement de pivotement du bras de levier de tension pivotable.

3. Pied de porte-charge selon l'une quelconque des revendications précédentes, le bras de levier de tension pivotable étant, pour une majorité de son mouvement de pivotement lors du mouvement du support de son deuxième état à son troisième état, indépendamment mobile d'un mouvement du bras de positionnement.

4. Pied de porte-charge selon l'une quelconque des revendications précédentes, ledit bras de levier de tension pivotable étant configuré pour pivoter autour d'un axe de pivotement de tension (A2) dans une direction orientée vers ledit corps lorsque le bras de levier de tension pivotable déplace ledit support de son deuxième état à son troisième état.

5. Pied de porte-charge selon l'une quelconque des revendications précédentes, ledit bras de positionnement étant un bras de positionnement pivotable qui est configuré pour pivoter autour d'un axe de pivotement de positionnement (A1) dans une direction orientée vers ledit corps lorsque le bras de positionnement pivotable déplace ledit support de son premier état à son deuxième état.

6. Pied de porte-charge selon l'une quelconque des revendications précédentes, le bras de levier de tension pivotable étant configuré pour verrouiller en position le bras de positionnement lorsque le support est dans son troisième état.

7. Pied de porte-charge selon l'une quelconque des revendications précédentes, ledit support étant un élément séparé dudit corps et ledit agencement de positionnement et de tension comprenant en plus un bras de raccordement (60, 160) raccordant en fonctionnement ledit corps audit support de telle manière que ledit support est raccordé de façon mobile audit corps.

8. Pied de porte-charge selon l'une quelconque des revendications précédentes, ledit bras de levier de tension pivotable comprenant une première partie d'extrémité (130A) configurée comme une poignée et une deuxième partie d'extrémité (130B) configurée comme une partie de came.

9. Pied de porte-charge selon l'une quelconque des revendications précédentes, ledit agencement de positionnement comprenant en plus un support de bras de positionnement (145) et ledit bras de positionnement ayant une première partie d'extrémité (141A) configurée comme une poignée et une deuxième partie d'extrémité (141B) raccordée audit support de bras de positionnement, ledit bras de positionnement étant configuré pour être déplacé d'une première position à une deuxième position en déplaçant ledit support de son premier état à son deuxième état

10. Pied de porte-charge selon l'une quelconque des revendications précédentes, ledit support comprenant une partie de structure de soutien (22A, 122A) soutenant ledit bras de positionnement et ledit bras de levier de tension pivotable, ladite partie de structure de soutien étant disposée entre ledit corps et ledit bras de positionnement et ledit bras de positionnement et le bras de levier de tension pivotable.

11. Pied de porte-charge selon la revendication 4, ledit bras de levier de tension pivotable étant configuré pour pivoter entre ses positions d'extrémité respectives de moins de 180 degrés.

12. Pied de porte-charge selon la revendication 5, ledit bras de positionnement pivotable étant configuré pour pivoter entre ses positions d'extrémité respectives de moins de 180 degrés.

13. Pied de porte-charge selon l'une quelconque des revendications précédentes, dans ledit premier état, ledit support étant disposé à une première distance (d1) de la deuxième surface du véhicule et dans un dit deuxième état ledit support étant disposé à une deuxième distance (d2) de la deuxième surface du véhicule, ladite deuxième distance étant plus petite que ladite première distance.

14. Pied de porte-charge selon l'une quelconque des revendications précédentes, ledit bras de positionnement comprenant une partie entretoise (144) configurée pour comprimer le support vers le corps, lorsque le support est déplacé de son premier état à son deuxième état.

15. Pied de porte-charge selon l'une quelconque des revendications précédentes, comprenant en plus un axe de guidage (24,124) raccordé audit support, ledit axe de guidage étant configuré pour être guidé dans une échancrure dans la deuxième surface du véhicule.
